# EUROPEAN PATENT SPECIFICATION

(11) **EP 2 677 873 B1**
(45) Date of publication and mention of the grant of the patent: **26.06.2019**
(21) Application number: 12705022.7
(22) Date of filing: 08.02.2012
(51) Int. Cl.: A21D 13/066, A21D 10/00, A21D 13/04, A21D 2/18, A23L 29/262, A23L 7/10, A23L 7/109, A23L 7/117, A21D 13/40, A21D 13/047, A21D 2/36, A21D 10/04, A21D 13/06

(54) **COMPOSITION COMPRISING GLUTEN-FREE CEREAL FLOUR**
ZUSAMMENSETZUNG ENTHALTENDE GLUTENFREIES MEHL
COMPOSITION COMPRENANT UNE FARINE SANS GLUTEN

(30) Priority: 24.02.2011 US 201161446304 P
(43) Date of publication of application: 01.01.2014
(73) Proprietor: Dow Global Technologies LLC, Midland, MI 48674 (US)
(72) Inventor: ZHANG, Li, Franklin Park, NJ 08823 (US); FLETCHER, Robert B., Midland, MI 48642 (US); ZHANG, Xiaodong, Belle Mead, NJ 08502 (US)
(74) Representative: f & e patent
(86) International application number: PCT/US2012/024276
(87) International publication number: WO 2012/115781

(56) References cited:
- EP-A1- 0 689 770
- EP-A2- 2 253 217
- WO-A1-99/33357
- WO-A1-2010/006778
- DE-A1- 2 438 597
- US-A- 4 109 018
- US-A1- 2010 291 272
- FALBE J; REGITZ: "ROMPP CHEMIE LEXIKON, 9. ERWEITERTE und neubearbeite AUFLAGE", 1990 page 2673, * the whole document *

## Description

### Field

This invention relates to a gluten-free composition comprising gluten-free cereal flour, to the use of the gluten-free composition in gluten-free food products, such as gluten-free bakery products or gluten-free pasta, and to a gluten-free food product made from the gluten-free composition for use in the treatment of gluten-related disorder in an individual.

### Background

Gluten is a protein complex found in triticeae tribe of grains, which includes wheat, barley and rye. The gluten content in wheat flour provides desirable organoleptic properties, such as texture and taste, to innumerable bakery and other food products. Gluten also provides the processing qualities to both the commercial food manufacturer as well as the home baker. In general, it is very difficult to make bread using gluten-free cereal flours such as rice flour and buckwheat flour. When dough is fermented with yeast, in the case of dough using wheat flour or rye flour containing gluten, the carbon dioxide gas generated by fermentation is retained by the gluten so that the gluten network is extended and the dough rises. In the case of dough using gluten-free cereal flour, the carbon dioxide gas generated by fermentation is not retained within the dough so that the dough does not efficiently rise. Gluten is considered by many to be the "heart and soul" of bakery and other food products.

However, gluten has its drawbacks. The gluten protein complex, upon entering the digestive tract, breaks down into peptide chains like other protein sources, but the resulting gluten-related peptide chain length is longer than for other proteins. For this and other reasons, in some people, these longer peptides trigger an immune response commonly referred to as celiac disease. Celiac disease is characterized by inflammation, villous atrophy and cryptic hyperplasia in the intestine. The mucosa of the proximal small intestine is damaged by an immune response to gluten peptides that are resistant to digestive enzymes. This damage interferes with the body's ability to absorb vital nutrients such as proteins, carbohydrates, fat, vitamins, minerals, and in some cases, even water and bile salts. If left untreated, celiac disease increases the risk of other disorders, such as anemia, osteoporosis, short stature, infertility and neurological problems, and has been associated with increased rates of cancer and other autoimmune disorders. Accordingly, much research has been spent on finding gluten-free food products.

European Patent Application No. EP 1 561 380 discloses a dough composition comprising gluten-free cereal flour, a water-soluble cellulose ether, and a low substituted cellulose ether having a molar substitution of 0.05-1.0. Examples of suitable water-soluble cellulose ethers include alkyl celluloses such as methyl cellulose, and hydroxyalkyl alkyl celluloses such as hydroxypropyl methyl cellulose or hydroxyethyl methyl cellulose. Preferred examples of low substituted cellulose ethers include a low substituted hydroxypropyl cellulose having a molar substitution of 0.091 to 0.51 and hydroxyethyl ethyl cellulose. The bread made from the dough composition is said to have a good mouth feel and a satisfactory volume, to retain softness over time, and to be eatable by those patients of food allergy to wheat or the like. However, the produced bread according to the examples only has a specific volume of about 2.5 - 3 cm³/g.

European Patent Application No. EP 2 153 724 discloses a dough composition which comprises at least a water-soluble hydroxypropyl methylcellulose having a hydroxypropoxyl molar substitution of from 0.05 to 0.3 and a degree of methoxyl substitution of from 1.4 to 1.9, wherein hydroxypropoxyl groups are classified into substituted hydroxypropoxyl groups having hydroxyl groups of the hydroxypropoxyl groups substituted further with methoxyl groups and unsubstituted hydroxypropoxyl groups having hydroxyl groups of the hydroxypropoxyl groups unsubstituted, and a ratio (A/B) of a molar fraction (A) of the substituted hydroxypropoxyl groups to a molar fraction (B) of the unsubstituted hydroxypropoxyl groups is 0.4 or greater; a gluten-free cereal flour; and water. A soft texture and good swallow feeling is reported.

However, dough compositions based on gluten-free cereal flours require quite a high amount of hydroxypropyl methylcellulose to result in food products, such as bakery products, having a soft texture and a high specific volume, as desired by the consumers.

US patent application publication No. 2008/0038434 discloses a composition for making a gluten-free product, which comprises a gluten-free gas retaining polymer, such as a chewing gum base, a gluten-free setting polymer, such as corn zein, and optionally a hydrocolloid, such as methylcellulose or hydroxypropyl methylcellulose. However, the suggested compositions for making a gluten-free product are complex and include a large number of ingredients.

WO 2010/006778 describes a composition for preparing gluten-free bakery products comprising enzyme active soy flour and hydrocolloid selected from alginate, carrageenan, guar gum, locust bean gum, pectin, scleroglucan, xanthan gum, carboxymethyl cellulose, methyl cellulose, hydroxypropyl cellulose and mixtures thereof. The gluten-free product is nutritious, soft and fresh for extended periods of time and is suitable for celiac disease patients.

In view of the above-mentioned deficiencies of the prior art compositions, one object of the present invention is to provide new compositions which are useful for the production of gluten-free food products. A preferred object of the present invention is to produce new compositions which are useful for the production of gluten-free food products which have substantially the same firmness and specific volume as gluten-free food products comprising hydroxypropyl methylcellulose, but which require a lower amount of hydrocolloids, such as hydroxypropyl methylcellulose.

### Summary

One aspect of the present invention is a gluten-free composition which comprises a) a gluten-free cereal flour, b) a hydroxypropyl methylcellulose or methyl cellulose, and c) a carboxymethyl cellulose, wherein the weight ratio between component b) and component c) is from 5:1 to 10:1.

Another aspect of the present invention is the use of the above-mentioned composition in a gluten-free food product.

Yet another aspect of the present invention is a gluten-free food product made from the above-mentioned composition for use in the treatment of gluten-related disorder in an individual.

It has surprisingly been found that the composition of the present invention which comprises i) a hydroxypropyl methylcellulose or methyl cellulose, and ii) a carboxymethyl cellulose in combination in above defined weight ratio, is useful for producing food products, such as bakery products, and in particular bread, which have substantially the same firmness and specific volume at a reduced amount of hydroxypropyl methylcellulose or methyl cellulose, as a comparable gluten-free food product comprising hydroxypropyl methylcellulose or methyl cellulose alone. This results in a significant savings to the food industry producing such food products, such as bakeries.

It has in particular been found that the composition of the present invention is useful for producing food products, such as bakery products, and in particular bread, which have an excellent and balanced combination of specific volume, firmness, springiness, and moisture content.

### Detailed Description

One aspect of the present invention is a composition which comprises a gluten-free cereal flour. This means that the composition itself and food products comprising or produced from the composition typically are also gluten-free. A typical method of making gluten-free food products consists of using only ingredients derived from gluten-free starting materials, rather than using flour derived from a gluten-containing grain, such as wheat. Accordingly, the composition of the present invention comprises a) a gluten-free cereal flour, such as: rice flour, corn flour, millet flour, oat flour, sorghum flour, sweet rice flour, or teff flour or a combination of two or more such flours. Preferred is rice flour, corn flour, millet flour, or a combination of two or more such flours. The flour is preferably used in an amount of from 50 to 98 percent, more preferably from 70 to 95 percent, based on the total dry weight of the composition. Furthermore, the composition of the present invention comprises b) a hydroxypropyl methylcellulose or methyl cellulose. Hydroxypropyl methylcellulose is preferred over methyl cellulose. Component b) is preferably used in an amount of at least 0.1 parts, more preferably at least 0.5 parts, and most preferably at least 1.0 parts by weight, based on 100 parts by weight of the gluten-free cereal flour(s). Component b) is preferably used in an amount of up to 5.0 parts, more preferably up to 3.0 parts and most preferably up to 2.0 parts by weight, based on 100 parts by weight of the gluten-free cereal flour(s).

Preferred methyl celluloses contain from 10 to 40 percent, more preferably from 20 to 35 percent, most preferably from 27 to 32 percent by weight of methyl groups, as determined according to United States Pharmacopeia (USP 32). Preferred hydroxypropyl methylcelluloses contain from 10 to 40 percent, more preferably from 15 to 30 percent, and most preferably from 19 to 24 percent by weight of methoxyl groups and from 3 to 35 percent, more preferably from 4 to 32, and most preferably from 4 to 12 percent by weight of hydroxypropoxyl groups, as determined according to United States Pharmacopeia (USP 32).

The viscosity of the methylhydroxypropyl cellulose or methyl cellulose generally is from 300 to 200,000 mPa·s, preferably from 400 to 100,000 mPa·s, more preferably from 1000 to 20,000 mPa·s, and most preferably from 2000 to 20,000 mPa·s, determined in a 2% by weight aqueous solution at 20°C in a Haake VT550 Viscotester at 20°C and at a shear rate of 2.55 s⁻¹.

Furthermore, the composition of the present invention comprises c) a carboxymethyl cellulose. Component c) is preferably used in an amount of at least 0.01 parts, more preferably at least 0.05 parts, and most preferably at least 0.10 parts by weight based on 100 parts by weight of the gluten-free cereal flour(s). Component c) is preferably used in an amount of up to 1.0 part, more preferably up to 0.50 parts and most preferably up to 0.30 parts by weight based on 100 parts by weight of the gluten-free cereal flour.

The term "carboxymethyl cellulose" or "CMC" as used herein encompasses cellulose substituted with groups of the formula -CH₂CO₂A, wherein A is hydrogen or a monovalent cation, such as K⁺ or preferably Na⁺. Preferably the carboxymethyl cellulose is in the form of its sodium salt, i.e., A is Na⁺. Typically, the carboxymethyl cellulose has a degree of substitution of from 0.20 to 0.95, preferably from 0.40 to 0.95, and more preferably from 0.65 to 0.95. The degree of substitution is the average number of OH groups that have been substituted in one anhydroglucose unit. It is determined according to ASTM D 1439-03 "Standard Test Methods for Sodium Carboxymethylcellulose; Degree of Etherification, Test Method B: Nonaqueous Titration". The treatment of a solid sample of the CMC with glacial acetic acid at boiling temperature releases an acetate ion quantity equivalent to the sodium carboxymethyl groups. These acetate ions can be titrated as a strong base in anhydrous acetic acid using a perchloric acid standard solution. The titration end point is determined potentiometrically. Other alkaline salts of carboxylic acids (e. g. sodium glycolate and di-sodium diglycolate) behave similarly and are co-titrated.

The viscosity of the carboxymethyl cellulose generally is from 20 to 20,000 mPa·s, preferably from 25 to 12,000 mPa·s, more preferably from 100 to 5,000 mPa·s, and most preferably from 500 to 2,500 mPa·s, determined in a 1% by weight aqueous solution at 25°C, using a Brookfield LVT viscometer, spindle No. 3, at 30 rpm.

The inventors of the present patent application have surprisingly found that the composition of the present invention comprising components b) and c) in combination is useful for producing food products, such as bakery products, and in particular bread, which have an excellent and balanced combination of specific volume, firmness, springiness, and moisture content. The weight ratio between component b) and component c) is from 1 : 1 to 10 : 1, and particularly 5 : 1 to 10 : 1.

The composition of the present invention may comprise one or more optional additional ingredients, in addition to components a), b), and c). Preferably not more than 50 parts, more preferably not more than 25 parts by weight of optional ingredients other than water are incorporated in the composition of the present invention, based on 100 parts by weight of the gluten-free cereal flour. Water can be added to the composition at a higher amount, as described further below.

Examples of other possible ingredients in gluten-free compositions and food products, besides components a), b), and c), are as follows: starches, including potato starch and cornstarch; gums, including xanthan gum and guar gum; gelatin; eggs; egg replacers; sweeteners, including sugars, molasses, and honey; salt; yeast; chemical leavening agents, including baking powder and baking soda; fats, including margarine and butter; oils, including vegetable oil; vinegar; dough enhancer; dairy products, including milk, powdered milk, and yogurt; soy milk; nut ingredients, including almond meal, nut milk, and nut meats; seeds, including flaxseed, poppy seeds, and sesame seeds; fruit and vegetable ingredients, including fruit puree and fruit juice; and flavorings, including rye flavor powder, vanilla, cocoa powder, and cinnamon. However, this is not a comprehensive list of all ingredients that can be used to make gluten-free food products, such as gluten-free bakery products.

Water may be incorporated in the composition of the invention, for example, when dough or batter, such as bread dough, is prepared. It is generally added in an amount of from 50 to 150 parts by weight, preferably from 60 to 100 parts by weight, more preferably from 79 to 90 parts by weight, based on 100 parts by weight of the gluten-free cereal flour.

The composition of the present invention is useful for preparing gluten-free food products, such as gluten-free bakery products, like breads, muffins, cakes, cookies or pizza crusts; gluten-free pasta, cereal products, crackers, and bar products. The composition of the present invention can be processed to the gluten-free food product in a conventional manner, for example by producing a dough or a batter from the composition of the present invention, subjecting it to molding or casting, optionally leavening the composition, and optionally baking it, depending on the kind of food product to be produced.

These food products are an excellent replacement of traditional gluten-containing food products, such as food products containing wheat flour. Accordingly, providing this food product to an individual suffering from a gluten-related disorder is an effective method of managing a gluten-related disorder in the individual.

The following examples are for illustrative purposes only and are not intended to limit the scope of the present invention. Unless otherwise mentioned, all parts and percentages are by weight.

### Example 1 and Comparative Examples A - C

A dough composition is prepared from 30 parts of rice flour, 10 parts of tapioca flour, 10 parts of potato flour, 40 parts of water, 1 part of salt, 4 parts of sucrose, 3 parts of vegetable oil, 1 part of active yeast, and a cellulose ether ingredient of the type and amount listed in Table 1 below. All the dry ingredients are weighted into a container and mixed well. The liquid ingredients are added into the dry ingredients under high shear. The dough is kneaded for 3 min and then transferred to a greased loaf pan for proofing at 100F (38°C) for one hour and 15 min. After that, it is baked at 392F (200°C) for 37 min. The bread physical properties are analyzed after the bread cooling for 2 hours.

The firmness and springiness and the moisture content of the bread listed in Table 1 below are measured as follows:
The moisture content is measured by loss on drying (LOD) using a Mettler LP 16 IR heater in conjunction with a Mettler PM100 scale. 0.5-1 g of bread is distributed evenly on an aluminum pan. The pan is then placed on the LOD balance and the cover closed. The heater is programmed to dry the bread at 120C. The instrument will continue to heat the sample until its stops losing weight. The moisture content is calculated by the weight loss of the sample. Moisture Content = (Initial sample weight - final sample weight)/initial sample weight.

The firmness and springiness are measured using a TA.XT2 Texture Analyzer. A slice of bread taken from the middle of the loaf is placed on the platform of the TA.XT2. A probe which is at known height then drops slowly onto the slice of bread. Once it comes in contact with the bread it drops a further 25% of the thickness of the bread slice, continually measuring the force the bread applies to it. Once at 25%, the probe stops dropping. The force the bread applies on the probe at this time is the firmness. After 60 seconds in this position the probe then lifts away from the slice of bread. The spring is the ratio of the force the bread was applying on the probe after 60 seconds divided by the force applied at 0 seconds.

The abbreviations in Table 1 below mean the following:
HPMC: Hydroxypropyl methylcellulose having 22.8 percent methoxyl groups by weight and 8 percent hydroxypropoxyl groups by weight, a viscosity of about 4000 mPa·s, determined in a 2% by weight aqueous solution at 20°C using a Brookfield viscometer, spindle No. 4, 20 rpm. and having a particle size that 95 percent of the particles pass through a 40 U.S. Standard mesh sieve which has a mesh size of 420 micrometers.
CMC: Carboxymethyl cellulose powder having a degree of DS(carboxymethyl) of about 0.9, a viscosity of about 1000 mPa·s, determined in a 1% by weight aqueous solution at 25°C, using a Brookfield LVT viscometer, spindle No. 3, at 30 rpm.

**Table 1**

| **(Comparative) Example** | **A** | **B** | **C** | **1** |
|---|---|---|---|---|
| Cellulose ether | HPMC | HPMC | CMC | HPMC and CMC at weight ratio o 8:1 |
| Total weight parts of cellulose ether per 100 parts of total flour weight | 3.0 | 1.56 | 2.0 | 1.68 (1.49 parts HPMC and 0.19 parts CMC) |

| **Properties of Bread** | | | | |
|---|---|---|---|---|
| Specific Volume (cm3/g) | 4.8 | 3.7 | 2.6 | 4.6 |
| Firmness (g) | 47 | 126 | 346 | 53 |
| Springiness (%) | 60 | 51 | 51 | 55 |
| Moisture (%) | 45 | 46 | 38 | 45 |

The results in Table 1 illustrate that food products, such as bakery products, and in particular bread, can be produced from the composition of the present invention which have an excellent and surprisingly balanced combination of specific volume, firmness, springiness, and moisture content when a combination of a hydroxypropyl methylcellulose and a carboxymethyl cellulose is incorporated in gluten-free compositions and food products.

The bakery product of Example 1 comprises substantially the same amount of HPMC as the product of Comparative Example B, but the bakery product of Example 1 has a significantly higher specific volume, is considerably less hard, has a higher springiness and about the same moisture as the bakery product of Comparative Example B. This is highly unexpected, since based on Comparative Example C the skilled artisan would rather expect an unfavorable impact on specific volume, firmness (hardness) and springiness by the incorporation of CMC in addition to the HPMC in the food product.

Moreover, the bakery product of Example 1 has essentially the same specific volume and moisture, not a much higher firmness and not a much lower springiness although

## Claims

1. A gluten-free composition comprising a) a gluten-free cereal flour, b) a hydroxypropyl methylcellulose or methyl cellulose, and c) a carboxymethyl cellulose, wherein the weight ratio between component b) and component c) is from 1 : 1 to 10 : 1.

2. The composition of claim 1 wherein the weight ratio between component b) and component c) is from 5 : 1 to 10 : 1.

3. The composition of claim 1 or 2 wherein component b) is hydroxypropyl methylcellulose.

4. The composition claim 3 wherein the hydroxypropyl methylcellulose has a viscosity of 1000 to 20,000 mPa·s, determined in a 2% by weight aqueous solution at 20°C.

5. The composition of claim 3 or 4 wherein the hydroxypropyl methylcellulose has from 15 to 30 percent by weight of methoxyl groups and from 4 to 32 percent by weight of hydroxypropoxyl groups.

6. The composition of any one of claims 1 to 5 wherein the carboxymethyl cellulose has a viscosity of from 100 to 5,000 mPa·s, determined in a 1% by weight aqueous solution at 25°C, using a Brookfield LVT viscometer, spindle No. 3, at 30 rpm..

7. The composition of claim 6 wherein the carboxymethyl cellulose has a viscosity of from 500 to 2,500 mPa·s, determined in a 1% by weight aqueous solution at 25°C, using a Brookfield LVT viscometer, spindle No. 3, at 30 rpm.

8. The composition of any one of claims 1 to 7 wherein the carboxymethyl cellulose has a degree of substitution of from 0.40 to 0.95.

9. The composition of any one of claims 1 to 8 additionally comprising water and being in the form of a dough or batter.

10. The composition of any one of claims 1 to 9 comprising from 0.1 to 5.0 parts by weight of component b) and from 0.01 to 1.0 part by weight of component c), based on 100 parts by weight of the gluten-free cereal flour.

11. The composition of any one of claims 1 to 10 comprising rice flour, buckwheat flour, corn flour, millet flour, tapioca flour, potato flour, or a combination of two or more flours.

12. Use of the composition of any one of claims 1 to 11 in a gluten-free food product.

13. Use of claim 12, wherein the food product is selected from the group consisting of gluten-free bakery products, gluten-free pasta, gluten-free cereal products, gluten-free crackers, and gluten-free bar products.

14. A gluten-free food product made from the composition of any of claims 1-11 for use in the treatment of gluten-related disorder in an individual.

15. The food product of claim 14, wherein the food product is selected from the group consisting of gluten-free bakery products, gluten-free pasta, gluten-free cereal products, gluten-free crackers, and gluten-free bar products.

## Patentansprüche

1. Glutenfreie Zusammensetzung enthaltend a) eine glutenfreies Getreidemehl, b) eine Hydroxypropylmethylcellulose oder Methylcellulose und c) eine Carboxymethylcellulose, wobei das Gewichtsverhältnis zwischen Komponente b) und Komponente c) 1:1 bis 10:1 beträgt.

2. Zusammensetzung nach Anspruch 1, wobei das Gewichtsverhältnis zwischen Komponente b) und Komponente c) 5:1 bis 10:1 beträgt.

3. Zusammensetzung nach Anspruch 1 oder 2, wobei die Komponente b) Hydroxypropylmethylcellulose ist.

4. Zusammensetzung nach Anspruch 3, wobei die Hydroxypropylmethylcellulose eine Viskosität von 1.000 bis 20.000 mPa·s, bestimmt in einer 2 gew.-%igen wässrigen Lösung bei 20°C, aufweist.

5. Zusammensetzung nach Anspruch 3 oder 4, wobei die Hydroxypropylmethylcellulose 15 bis 30 Gew.-% Methoxylgruppen und 4 bis 32 Gew.-% Hydroxypropoxylgruppen aufweist.

6. Zusammensetzung nach einem der Ansprüche 1 bis 5, wobei die Carboxymethylcellulose eine Viskosität von 100 bis 5.000 mPa·s, bestimmt in einer 1 gew.-%igen wässrigen Lösung bei 25°C unter Verwendung eines Brookfield LVT Viskosimeters mit Spindel Nr. 3 bei 30 U/min, aufweist.

7. Zusammensetzung nach Anspruch 6, wobei die Carboxymethylcellulose eine Viskosität von 500 bis 2.500 mPa·s, bestimmt in einer 1 gew.-%igen wässrigen Lösung bei 25°C unter Verwendung eines Brookfield LVT Viskosimeters mit Spindel Nr. 3 bei 30 U/min, aufweist.

8. Zusammensetzung nach einem der Ansprüche 1 bis 7, wobei die Carboxymethylcellulose einen Substitutionsgrad von 0,40 bis 0,95 aufweist.

9. Zusammensetzung nach einem der Ansprüche 1 bis 8, die zusätzlich Wasser aufweist und in Form eines Teigs oder einer Panade vorliegt.

10. Zusammensetzung nach einem der Ansprüche 1 bis 9, die 0,1 bis 5,0 Gewichtsteile der Komponente b) und 0,01 bis 1,0 Gewichtsteile der Komponente c), bezogen auf 100 Gewichtsteile des glutenfreien Getreidemehls, enthält.

11. Zusammensetzung nach einem der Ansprüche 1 bis 10 enthaltend Reismehl, Buchweizenmehl, Maismehl, Hirsemehl, Tapiocamehl, Kartoffelmehl oder eine Kombination von zwei oder mehr Mehlen.

12. Verwendung der Zusammensetzung nach einem der Ansprüche 1 bis 11 in einem glutenfreien Lebensmittel.

13. Verwendung nach Anspruch 12, wobei das Lebensmittel ausgewählt ist aus der Gruppe bestehend aus glutenfreien Bäckereiprodukten, glutenfreier Pasta, glutenfreien Cerealien, glutenfreien Cräckern und glutenfreien Riegeln.

14. Glutenfreies Lebensmittel, das aus einer Zusammensetzung nach einem der Ansprüche 1 bis 11 hergestellt ist, zur Verwendung zur Behandlung von glutenbedingten Störungen in einem Individuum.

15. Lebensmittel nach Anspruch 14, wobei das Lebensmittel ausgewählt ist aus der Gruppe bestehend aus glutenfreien Bäckereiprodukten, glutenfreier Pasta, glutenfreien Cerealien, glutenfreien Cräckern und glutenfreien Riegeln.

## Revendications

1. Une composition sans gluten comprenant a) une farine de céréale sans gluten, b) une hydroxypropylméthylcellulose ou méthylcellulose, et c) une carboxyméthylcellulose, dans laquelle le rapport pondéral entre le constituant b) et le constituant c) va de 1/1 à 10/1.

2. La composition de la revendication 1 dans laquelle le rapport pondéral entre le constituant b) et le constituant c) va de 5/1 à 10/1.

3. La composition de la revendication 1 ou de la revendication 2 dans laquelle le constituant b) est l'hydroxypropylméthylcellulose.

4. La composition de la revendication 3 dans laquelle l'hydroxypropylméthylcellulose a une viscosité de 1 000 à 20 000 mPa·s, déterminée dans une solution aqueuse à 2 % en poids à 20 °C.

5. La composition de la revendication 3 ou de la revendication 4 dans laquelle l'hydroxypropylméthylcellulose a de 15 à 30 pour cent en poids de groupes méthoxyle et de 4 à 32 pour cent en poids de groupes hydroxypropoxyle.

6. La composition de n'importe laquelle des revendications 1 à 5 dans laquelle la carboxyméthylcellulose a une viscosité allant de de 100 à 5 000 mPa·s, déterminée dans une solution aqueuse à 1 % en poids à 25 °C, en utilisant un viscosimètre Brookfield LVT, mobile n° 3, à 30 tr/min.

7. La composition de la revendication 6 dans laquelle la carboxyméthylcellulose a une viscosité allant de 500 à 2 500 mPa·s, déterminée dans une solution aqueuse à 1 % en poids à 25 °C, en utilisant un viscosimètre Brookfield LVT, mobile n° 3, à 30 tr/min.

8. La composition de n'importe laquelle des revendications 1 à 7 dans laquelle la carboxyméthylcellulose a un degré de substitution allant de 0,40 à 0,95.

9. La composition de n'importe laquelle des revendications 1 à 8 comprenant en outre de l'eau et étant sous la forme d'une pâte ou d'une pâte à frire.

10. La composition de n'importe laquelle des revendications 1 à 9 comprenant de 0,1 à 5,0 parties en poids de constituant b) et de 0,01 à 1,0 partie en poids de constituant c), rapportées à 100 parties en poids de la farine de céréale sans gluten.

11. La composition de n'importe laquelle des revendications 1 à 10 comprenant de la farine de riz, de la farine de sarrasin, de la farine de maïs, de la farine de millet, de la farine de tapioca, de la farine de pomme de terre, ou une combinaison de deux farines ou plus.

12. Utilisation de la composition de n'importe laquelle des revendications 1 à 11 dans un produit alimentaire sans gluten.

13. Utilisation de la revendication 12, dans laquelle le produit alimentaire est sélectionné dans le groupe constitué de produits de boulangerie sans gluten, de pâtes sans gluten, de produits céréaliers sans gluten, de biscuits sans gluten, et de produits en barre sans gluten.

14. Un produit alimentaire sans gluten fait à partir de la composition de n'importe lesquelles des revendications 1 à 11 pour une utilisation dans le traitement d'un trouble lié au gluten chez une personne.

15. Le produit alimentaire de la revendication 14, le produit alimentaire étant sélectionné dans le groupe constitué de produits de boulangerie sans gluten, de pâtes sans gluten, de produits céréaliers sans gluten, de biscuits sans gluten, et de produits en barre sans gluten.
